# EUROPÄISCHE PATENTSCHRIFT

(11) **EP 4 405 213 B1**
(45) Veröffentlichungstag und Bekanntmachung des Hinweises auf die Patenterteilung: **19.11.2025**
(21) Anmeldenummer: 23703122.4
(22) Anmeldetag: 26.01.2023
(51) Int. Cl.: B60R 13/02, B60R 7/04, B60N 3/00

(54) **NACHRÜSTSATZ FÜR EIN KRAFTFAHRZEUG, INSBESONDERE EINEN CAMPINGBUS**
AFTERMARKET KIT FOR AUTOMOTIVE VEHICLE, IN PARTICULAR CAMPER
KIT DE LA DEUXIÈME MONTE POUR VÉHICULE AUTOMOBILE, NOTAMMENT CAMPING-CAR

(30) Priorität: 30.08.2022 AT 506622022
(43) Veröffentlichungstag der Anmeldung: 31.07.2024
(73) Patentinhaber: Mattes, Erwin, 1210 Wien (AT)
(72) Erfinder: KOLLER, Markus, 8160 Weiz (AT)
(74) Vertreter: Wirnsberger & Lerchbaum Patentanwälte OG
(86) Internationale Anmeldenummer: PCT/AT2023/060019
(87) Internationale Veröffentlichungsnummer: WO 2024/044799

(56) Entgegenhaltungen:
- JP-A- H10 248 647
- KR-A- 20220 101 340
- US-A- 5 080 417

## Beschreibung

Die Erfindung betrifft einen Nachrüstsatz für ein Kraftfahrzeug, insbesondere einen Bus wie einen Campingbus, aufweisend einen Einsatz zum Einbau in einem Inneren des Kraftfahrzeuges, wobei der Einsatz zur lösbaren Aufnahme zumindest eines Campingartikels mit einer Vertiefung ausgebildet ist, und eine Abdeckung für den Einsatz, sodass die Vertiefung abdeckbar ist, wobei die Abdeckung als Campingtisch mit einer Tischplatte und ausklappbaren Beinen ausgebildet ist, wobei die Vertiefung die Beine des Campingtisches aufnimmt und die Tischplatte des Campingtisches die Vertiefung des Einsatzes abdeckt.

Ein Fahrzeug wie ein Kraftfahrzeug oder Bus ist mit einer Karosserie ausgestattet, welche ein äußeres Erscheinungsbild prägt. Im Innenraum des Fahrzeuges ist eine Innenverkleidung gegeben, welche das Aussehen und auch die Funktionalitäten im Inneren bestimmt. Die Innenverkleidungsteile werden unmittelbar oder mittelbar auf den Karosserieteilen befestigt, wofür entsprechende Aufnahmen oder andere strukturelle Befestigungspunkte vorgesehen sein können.

Zwischen den eigentlichen, vom Inneren her sichtbaren Innenverkleidungsteilen und der das Fahrzeug nach außen hin abschließenden Karosserie besteht üblicherweise genügend Platz, um allfällige weitere Komponenten unterzubringen. Hierzu zählt beispielsweise eine Kabelführung oder auch eine Unterbringung von Notfallausrüstung und -hilfe zwischen einzelnen Innenverkleidungsteilen und der Karosserie. In dieser Weise kann Platz effektiv genutzt werden.

Im Zusammenhang mit einer effektiven Ausnutzung von zur Verfügung stehendem Platz ist es auch bekannt geworden, den Innenbereich eines Kraftfahrzeuges so zu gestalten, dass Campingaccessoires, insbesondere Campingtische aufgenommen werden können. In der DE 10 2007 052 528 A1 ist beispielsweise ein tiefgezogenes Innenverkleidungsteil offenbart, das mit Langlöchern oder anderen Freiformlöchern ausgebildet sein kann, sodass an diesen oder in diese hinein Funktionseinsätze wie beispielsweise auch ein Klapptisch montierbar sein sollen. Wenngleich dadurch Platz ausgenutzt wird, ist eine spezielle Montage mit Aufwand verbunden und führt eine Montage eines Klapptisches in der vorgesehenen Aufnahme dazu, dass eine weitere Verkleidung erforderlich ist, um eine bündige Oberfläche zu erreichen. Darüber hinaus ist eine fixe Montage in Bezug auf eine Flexibilität nachteilig.

In der DE 100 47 843 A1 ist eine Aufnahmevorrichtung für Campingaccessoires offenbart, die in einer Heckklappe eines Kraftfahrzeuges angeordnet ist. Die Aufnahmevorrichtung weist in den Heckbereich eingelassene vertiefte Bereiche auf, in welchen Campingaccessoires wie Campingstühle aufgenommen werden können. Hierfür ist eine Mulde vorgesehen, beispielsweise in Form eines Plastikbauteiles, wobei die Mulde im Wesentlichen einen Hohlraum zwischen Heckklappe und Fahrzeuginnenraum abdeckt. In dieser Mulde können beispielsweise Campingstühle lösbar befestigt werden. Die Mulde wird mit einer Abdeckung, die mit einem Schließmechanismus ausgestattet ist, abgedeckt, sodass die Campingstühle oder anderen Campingaccessoires zum Innenraum hin nicht sichtbar verstaut werden können.

In der JP 10-248647 A ist ein Campingtisch offenbart, der in die Rückwand einer Rücksitze bildenden Bank eingelegt werden kann und diese nach außen hin abschließt. Die US 5,080,417 und die KR 10-2022-0101340 A offenbaren ebenfalls Campingtische, die im Inneren eines Kraftfahrzeuge integral positioniert sein können.

Campingaccessoires sollen auf der einen Seite leicht verstaubar und rasch verfügbar sein, auf der anderen Seite aber nicht dazu führen, dass eine Innenverkleidung des Fahrzeuges in der Anmut gestört wird. Hier liegt ein gewisser Zielkonflikt vor: Gemäß dem Stand der Technik können die zur Benutzung verstauten Campingaccessoires aufgrund vorgesehener Abdeckungen zwar unter Erhalt eines üblichen Erscheinungsbildes des Fahrzeuginneren verstaut werden, allerdings für den Preis einer relativ aufwendigen Montage. Möglich wäre es, eine Abdeckung wegzulassen, dann wird allerdings ein Erscheinungsbild des Fahrzeuginneren wesentlich beeinträchtigt.

Ein weiterer Nachteil der bestehenden Lösungen liegt darin, dass diese vom Fahrzeugbauer vorgegeben werden. Nachträgliche Adaptierungen sind dann nicht möglich.

Hier setzt die Erfindung an. Aufgabe der Erfindung ist es, einen Nachrüstsatz der eingangs genannten Art anzugeben, mit welchem ein Campingartikel auf einfache Weise rasch und im Wesentlichen unter Erhalt einer Optik und Anmut im Fahrzeuginneren in diesem verstaubar ist.

Diese Aufgabe wird gelöst durch einen Nachrüstsatz nach Anspruch 1.

Mit einem erfindungsgemäßen Nachrüstsatz werden mehrere Vorteile erzielt. Erstens fungiert der Campingtisch als Abdeckung. Dadurch kann durch geeignete Ausbildung einer Oberfläche der Tischplatte eine anmutig homogene Eingliederung der entsprechenden Fläche in die Oberfläche des Fahrzeuginneren erfolgen. Darüber hinaus ist die Vertiefung abgedeckt, sodass auch eine bündige Oberfläche gegeben ist. Eine Anpassung der Oberflächenausmaße der Tischplatte ist dabei mit Vorteil so getroffen, dass diese mit den übrigen Bereichen des Einsatzes entweder bündig abschließt oder diese auch überdeckt, insbesondere wenn bereichsweise weitere Vertiefungen vorliegen. Zweitens lässt sich eine einfache Befestigung erreichen, weil die Abdeckung als Campingtisch mit einer Tischplatte und ausklappbaren Beinen ausgebildet ist. Die Vertiefung nimmt die ausklappbaren Beine, allerdings im eingeklappten Zustand, auf, wohingegen die Tischplatte passgenau von korrespondierenden Aussparungsbereichen des Einsatzes aufgenommen werden kann. Es ist dann lediglich erforderlich, mit einem Hebel oder dergleichen den Campingtisch in diesem Zustand zu fixieren. Drittens kann der Nachrüstsatz geeignet zur Nachrüstung bestehender Kraftfahrzeuge ausgebildet sein, sodass beispielsweise eine Schiebetüre eines Campingbusses mit wenigen Handgriffen umgerüstet werden kann. Es ist somit auf einfache Weise möglich, bei geeigneter Auslegung des Einsatzes bestehende Campingbusse umzubauen.

Die Tischplatte des Campingtisches ist bevorzugt so ausgebildet, dass diese die Vertiefung des Einsatzes formschlüssig abdeckt. Die Möglichkeit einer formschlüssigen Abdeckung des Einsatzes führt trotz Nach- bzw. Umrüstung zu einem im Wesentlichen unveränderten Erscheinungsbild im Inneren des Kraftfahrzeuges. Auch die Funktionalität an der Innenseite des Kraftfahrzeuges bleibt unverändert, da der Hohlraum zur Karosserie hin grundsätzlich nicht zugänglich sein soll.

Die Vertiefung weist mehrere Mulden auf, um jeweils ein Paar von ausklappbaren Beinen des Campingtisches aufzunehmen. Bevorzugt sind zwei Mulden vorgesehen, die parallel verlaufen. Die ausklappbaren Beine des Campingtisches sind dann entsprechend im rechten Winkel ausklappbar. Bei entsprechender Ausbildung einer oder mehrerer Mulden ist es aber auch möglich, dass die Beine überkreuzt ausklappbar sind.

Die Mulden sind erfindungsgemäß derart ausgeformt, dass diese die Beine des Campingtisches im eingeklappten Zustand derselben im Wesentlichen passgenau aufnehmen. Dies hat den Vorteil, dass der Campingtisch weitgehend positionsstabil in die Vertiefung eingelegt werden kann, insbesondere wenn die erwähnten Mulden zur paarweisen Aufnahme von parallel angeordneten Beinen des Campingtisches vorgesehen sind. Da der Campingtisch dann lediglich mit einer weiteren Maßnahme gegen Herausfallen aus der Vertiefung zu sichern ist, ergibt sich mit einfachen Mitteln eine sichere Positionierung für eine Fahrt.

Der Einsatz ist üblicherweise aus einem Kunststoff gebildet. Insbesondere kann der Einsatz durch Spritzgießen erstellt sein. Hierfür kommen übliche Polymere zur Anwendung, wie diese im Fahrzeugbau verwendet werden.

Der Einsatz kann einen ersten Bereich aufweisen, der im Wesentlichen in einer Ebene einer Oberkante verläuft, und einen zweiten Bereich, in dem die Vertiefung vorliegt. Auf diese Weise ist es möglich, neben der Vertiefung im Einsatz noch weitere Funktionalitäten vorzusehen. Beispielsweise kann im ersten Bereich ein Netz zur Aufnahme kleinerer Campingartikel befestigt sein. Möglich ist es auch, dass im ersten Bereich im Anschluss an die Vertiefung eine handgroße Einbuchtung eingeformt ist, sodass der Campingtisch bei Herausnahme oder gegebenenfalls auch beim Einsetzen leicht angegriffen werden kann. Dabei ist der erste Bereich mit Vorteil an einer oberen Seite des Einsatzes angeordnet. Insbesondere an dieser oberen Seite kann der erste Bereich eine Aufnahme wie ein Netz aufweisen, in welcher Aufnahmegegenstände lagerbar sind.

Wenngleich es insbesondere bei formschlüssiger Anbringung des Campingtisches als Abdeckung bereits ausreichend sein kann, dass dieser positionsstabil in bzw. auf der Vertiefung hält, ist bevorzugt am und/oder im Einsatz ein Schließmechanismus vorgesehen, welcher zur Fixierung des Campingtisches geeignet ausgebildet ist. Der Campingtisch kann dann formschlüssig in der Vertiefung bzw. auf dieser anliegen und ist zugleich gegen unbeabsichtigtes Herausfallen durch den Schließmechanismus gesichert. Der Schließmechanismus kann beispielsweise als drehbarer Hebel ausgebildet sein, welcher sich im ersten Bereich des Einsatzes befindet und bei eingesetztem Campingtisch zur Befestigung desselben um 90° nach unten gedreht und zur Lösung desselben wieder um 90° (oder mehr) nach oben gedreht wird.

Um eine besonders gute Fixierung des Campingtisches in der Vertiefung zu erreichen, ist mit Vorteil vorgesehen, dass der Schließmechanismus durch Druck aktivierbar ist. Durch einfaches Andrücken mit Hand kann dann die Fixierung des Campingtisches sowie Lösen desselben aus der Position in bzw. auf der Vertiefung ausgelöst werden. Hierbei kann insbesondere vorgesehen sein, dass der Schließmechanismus entgegen einer Federkraft arretierbar und durch Druckbetätigung entarretierbar ist. Hierfür eignet sich beispielsweise ein Schließmechanismus mit einem oder vorteilhafterweise zwei Federschnäppern. Andere Schließmechanismen, welche ein Öffnen und Schließen durch leichtes händisches Antasten erlauben, können ebenso eingesetzt werden.

Entsprechend den vorstehend dargestellten Vorteilen umfasst die Erfindung in einem weiteren Aspekt ein Kraftfahrzeug mit einem erfindungsgemäßen Nachrüstsatz. Bei dem Kraftfahrzeug kann es sich insbesondere um einen Bus wie einen Campingbus handeln.

Von Vorteil ist es, wenn eine Oberfläche der Tischplatte des Campingtisches im Wesentlichen einer Oberfläche einer angrenzenden Innenoberfläche entspricht. Dabei kann der Einsatz in einer Seitenverkleidung des Kraftfahrzeuges angeordnet sein. Bei der Seitenverkleidung kann es sich insbesondere um einen Teil einer seitlichen Tür eines Campingbusses oder eine Schiebetür eines Transportfahrzeuges handeln.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine Draufsicht auf einen erfindungsgemäßen Nachrüstsatz;
Fig. 2 eine rückseitige Ansicht des Einsatzes aus Fig. 1;
Fig. 3 eine rückseitige Ansicht des Einsatzes aus Fig. 1 in perspektivischer Teildarstellung;
Fig. 4 eine Draufsicht auf einen Einsatz gemäß Fig. 1 ohne Campingtisch;
Fig. 5 eine Seitenansicht des Einsatzes aus Fig. 4;
Fig. 6 eine Draufsicht auf einen weiteren Nachrüstsatz;
Fig. 7 den Nachrüstsatz aus Fig. 6 mit betätigtem Schließmechanismus;
Fig. 8 einen Federschnäpper in einer ersten Position;
Fig. 9 den Federschnäpper aus Fig. 8 in einer zweiten Position;
Fig. 10 einen weiteren Schließmechanismus.

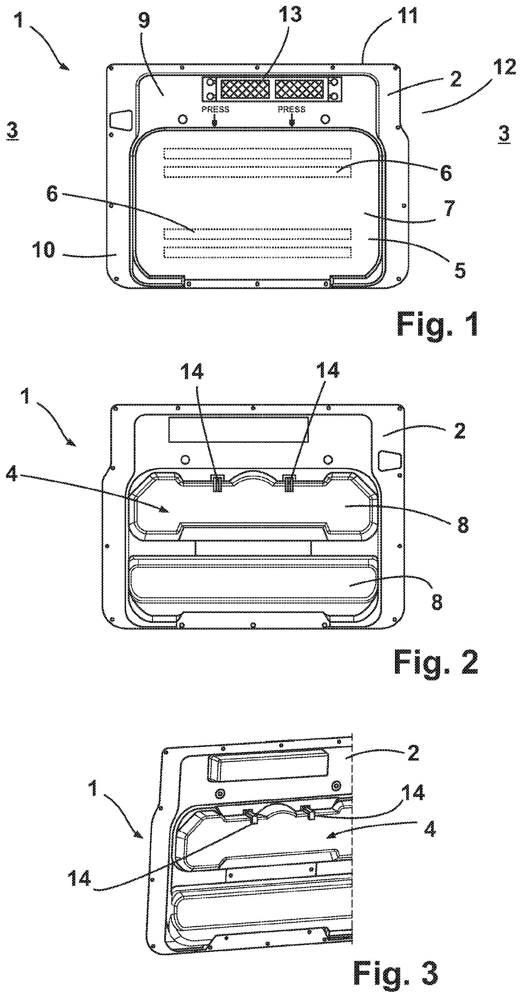

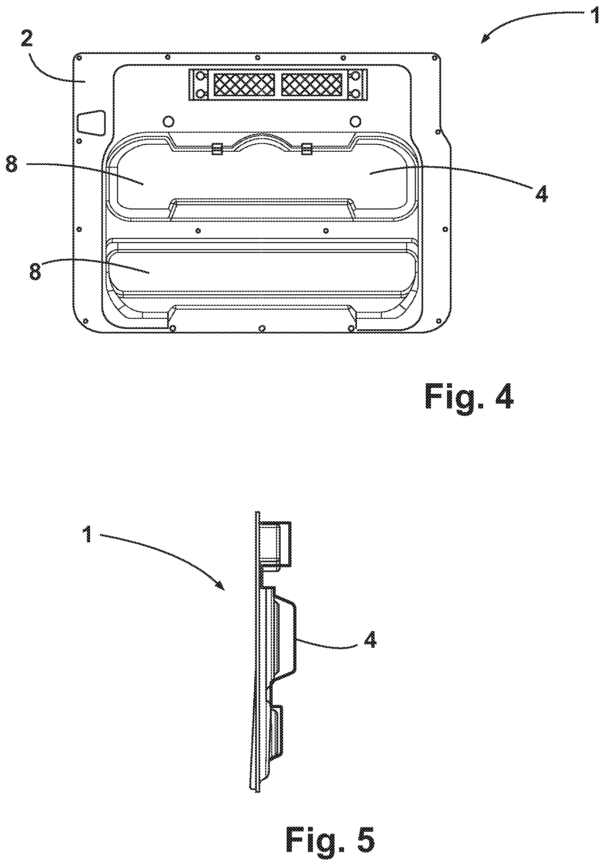

In Fig. 1 bis Fig. 5 ist eine erste Variante eines Nachrüstsatzes 1 dargestellt. Der Nachrüstsatz 1 ist für einen Campingbus oder dergleichen ausgelegt. Hierfür ist der Nachrüstsatz 1 allgemein in den äußeren Abmessungen entsprechend einem zu ersetzenden Teil und/oder Ausschnitt einer Innenverkleidung des Campingbusses oder dergleichen angepasst, insbesondere zur formschlüssigen Einpassung. Der Nachrüstsatz 1 umfasst einen Einsatz 2, der mit einer Vertiefung 4 ausgebildet ist, wie insbesondere in Fig. 4 und Fig. 5 ersichtlich ist. Die Vertiefung 4 weist zwei länglich ausgebildete, voneinander separierte Mulden 8 auf. Diese Mulden 8 können gemäß Fig. 1 einen Campingtisch 5 samt daran befestigten Beinen 6 aufnehmen, die in Fig. 1 schematisch in strichlierter Ausführung angedeutet sind. Der Campingtisch 5 dient als Abdeckung und deckt jenen Bereich, in welchem die Vertiefung 4 vorliegt, vollständig ab. Die Abdeckung ist dabei so gestaltet, dass der Campingtisch 5 im Wesentlichen bündig mit der restlichen Oberfläche des Einsatzes 2 und damit auch mit einem nicht weiter dargestellten Inneren 3 des Kraftfahrzeuges abschließt. Somit ist eine homogene Erscheinungsform gegeben. Insbesondere kann eine Haptik einer Oberfläche einer Tischplatte 7 entsprechend adaptiert werden, um zu jener im Inneren 3 des Fahrzeuges zu korrespondieren, zumindest im angrenzenden Bereich.

Der Einsatz 2 gemäß Fig. 1 bis Fig. 5 weist einen ersten Bereich 9 auf, der an einer von einer Oberkante 11 weg und in deren Eben verläuft und einer oberen Seite 12 des Einsatzes 2 zugewandt ist. In diesem ersten Bereich 9 kann beispielsweise ein Netz 13 oder ein anderes Mittel zur Aufnahme von kleineren Gegenständen befestigt sein, was die Funktionalität des Nachrüstsatzes 1 weiter erhöht. Unter dem Netz 13 kann ein vertiefter Bereich vorliegen.

Der Campingtisch 5, welcher als Abdeckung fungiert, wird formschlüssig in die Vertiefung 4 eingesetzt. Idealerweise kann der entsprechende Formschluss bereits als solcher so stark wirken, dass keine weitere Befestigung für den Campingtisch 5 erforderlich ist. Bevorzugt sollte jedoch zumindest ein Schließmechanismus 14 vorgesehen sein, der in Fig. 2 und Fig. 3 rückseitig für die Variante gemäß Fig. 1 bis Fig. 5 ersichtlich ist. Bei der Variante gemäß Fig. 1 bis Fig. 5 sind zwei Schließmechanismen 14 vorgesehen, die später noch näher erläutert werden. Dadurch ist es möglich, den Campingtisch 5 nach Einsetzen in die Vertiefung 4 zu verriegeln und bei Bedarf bzw. bei gegebener Benutzung wieder zu lösen.

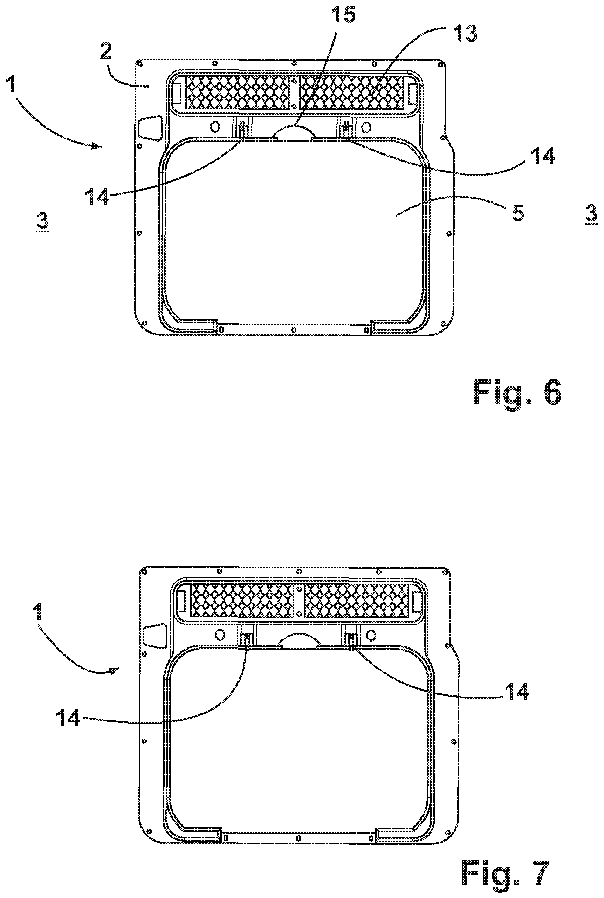

In Fig. 6 und Fig.7 ist ein weiterer Nachrüstsatz 1 in Draufsicht im arretierten Zustand (Fig. 6) und entarretierten Zustand (Fig. 7) dargestellt. Dieser Nachrüstsatz 1 ist grundsätzlich weitgehend gleich jenem nach Fig. 1 bis Fig. 5 ausgebildet, weist aber zusätzlich eine Einbuchtung 15 im ersten Bereich 9 auf, sodass der Campingtisch 5 zusätzlich angegriffen werden kann. Dies kann je nach Schließmechanismus 14 zweckmäßig sein.

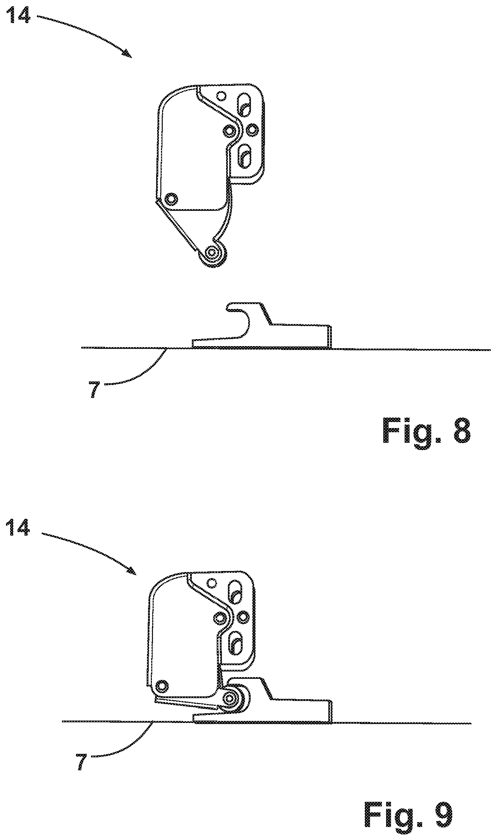

In Fig. 8 und Fig. 9 ist ein möglicher Schließmechanismus 14 dargestellt, welche bei dem Nachrüstsatz 1 gemäß Fig. 1 bis Fig. 5 zur Anwendung kommt. Es handelt sich hierbei um einen Federschnäpper, der in Fig. 8 in einer gelösten und in Fig. 9 in einer geschlossenen Position dargestellt ist. Derartige Federschnäpper sind aus dem Stand der Technik bekannt. Der größere Teil ist im Einsatz 2 befestigt, wohingegen der auslösende Teil am Campingtisch 5 unterhalb an der Tischplatte 7 befestigt ist. Für die Betätigung bzw. Einsetzen ist dann lediglich der Campingtisch 5 an dessen unterer Kante in die Vertiefung 4 einzusetzen und nach vorne, entgegen der Federkraft des Federschnäppers zu drücken. Dieser verschließt dann. Für ein Lösen ist es dann lediglich erforderlich, an den in Fig. 1 ersichtlich gemachten Stellen ("Press") anzudrücken und der Campingtisch 5 wird gelöst und kann rasch entnommen werden.

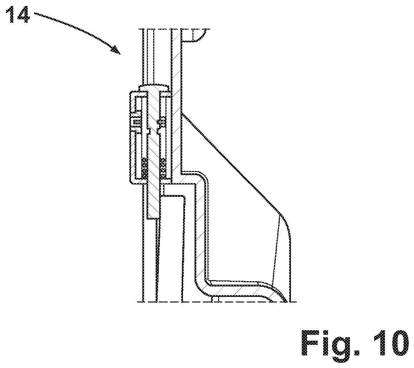

In Fig. 10 ist ein weiterer Schließmechanismus 14 gezeigt, der bei der Variante gemäß Fig. 8 und Fig. 9 verbaut ist. In diesem Fall handelt es sich ebenfalls um einen Schließmechanismus 14, der entgegen einer Federkraft betätigt werden kann. Bei Drücken des eingezeichneten Knopfes wird eine mit dem Knopf in Verbindung stehende Feder betätigt, sodass der längliche Bolzen, welcher ebenfalls gegen eine Federkraft gespannt ist, nach oben nachgibt. Der Campingtisch 5 kann dann entnommen werden, wenn beide Bolzen entarretiert sind. Da in diesem Fall eine Betätigung nicht direkt durch den Campingtisch 5 erfolgt, ist es zweckmäßig, wenn auch die erwähnte Einbuchtung 15 für ein Greifen des Campingtisches 5 vorhanden ist.

Schließmechanismen 14, welche gegen eine oder mehrere Federkräfte arbeiten, sind im Rahmen der Erfindung bevorzugt. Möglich ist es aber auch, wie bereits vorstehend ausgeführt, dass der Campingtisch 5 beispielsweise lediglich durch einen oder mehrere drehbare Hebel fixiert wird.

## Patentansprüche

1. Nachrüstsatz (1) für ein Kraftfahrzeug, insbesondere einen Bus wie einen Campingbus, aufweisend einen Einsatz (2) zum Einbau in einem Inneren (3) des Kraftfahrzeuges, wobei der Einsatz (2) zur lösbaren Aufnahme zumindest eines Campingartikels mit einer Vertiefung (4) ausgebildet ist, und eine Abdeckung für den Einsatz (2), sodass die Vertiefung (4) abdeckbar ist, wobei die Abdeckung als Campingtisch (5) mit einer Tischplatte (7) und ausklappbaren Beinen (6) ausgebildet ist, wobei die Vertiefung (4) die Beine (6) des Campingtisches (5) aufnimmt und die Tischplatte (7) des Campingtisches (5) die Vertiefung (4) des Einsatzes (2) abdeckt, **dadurch gekennzeichnet, dass** die Vertiefung (4) mehrere Mulden (8) aufweist und die Mulden (8) derart ausgeformt sind, dass diese die Beine (6) des Campingtisches (5) im eingeklappten Zustand derselben im Wesentlichen passgenau aufnehmen.

2. Nachrüstsatz (1) nach Anspruch 1, **dadurch gekennzeichnet, dass** die Tischplatte (7) des Campingtisches (5) die Vertiefung (4) des Einsatzes (2) formschlüssig abdeckt.

3. Nachrüstsatz (1) nach Anspruch 1 oder 2, **dadurch gekennzeichnet, dass** der Einsatz (2) aus einem Kunststoff gebildet ist.

4. Nachrüstsatz (1) nach Anspruch 3, **dadurch gekennzeichnet, dass** der Einsatz (2) durch Spritzgießen erstellt ist.

5. Nachrüstsatz (1) nach einem der Ansprüche 1 bis 4, **dadurch gekennzeichnet, dass** der Einsatz (2) einen ersten Bereich (9) aufweist, der im Wesentlichen in einer Ebene einer Oberkante (11) verläuft, und einen zweiten Bereich (10), in dem die Vertiefung (4) vorliegt, wobei der erste Bereich (9) an einer oberen Seite (12) des Einsatzes (2) angeordnet ist, wobei der erste Bereich (9) eine Aufnahme wie ein Netz (13) aufweist, in welcher Aufnahme Gegenstände lagerbar sind.

6. Nachrüstsatz (1) nach einem der Ansprüche 1 bis 5, **dadurch gekennzeichnet, dass** am und/oder im Einsatz (2) ein Schließmechanismus (14) vorgesehen ist, welcher zur Fixierung des Campingtisches (5) geeignet ausgebildet ist.

7. Nachrüstsatz (1) nach Anspruch 6, **dadurch gekennzeichnet, dass** der Schließmechanismus (14) durch Druck aktivierbar ist.

8. Nachrüstsatz (1) nach Anspruch 6 oder 7, **dadurch gekennzeichnet, dass** der Schließmechanismus (14) entgegen einer Federkraft arretierbar und durch Druckbetätigung entarretierbar ist.

9. Kraftfahrzeug mit einem Nachrüstsatz (1) nach einem der Ansprüche 1 bis 8.

10. Kraftfahrzeug nach Anspruch 9, **dadurch gekennzeichnet, dass** eine Oberfläche der Tischplatte (7) des Campingtisches (5) im Wesentlichen einer Oberfläche einer angrenzenden Innenoberfläche entspricht.

11. Kraftfahrzeug nach Anspruch 9 oder 10, **dadurch gekennzeichnet, dass** der Einsatz (2) in einer Seitenverkleidung des Kraftfahrzeuges angeordnet ist.

## Claims

1. A retrofitting set (1) for a motor vehicle, in particular a bus such as a camper, comprising an insert (2) for installation in an interior (3) of the motor vehicle, wherein the insert (2) is formed with a recess (4) to detachably accommodate at least one camping article, and a cover for the insert (2) so that the recess (4) can be covered, wherein the cover is designed as a camping table (5) with a tabletop (7) and fold-out legs (6), wherein the recess (4) accommodates the legs (6) of the camping table (5), and the tabletop (7) of the camping table (5) covers the recess (4) of the insert (2), **characterised in that** the recess (4) has a plurality of troughs (8) and the troughs (8) are shaped in such a manner that they accommodate the legs (6) of the camping table (5) in the folded-in state thereof in a substantially precisely fitting manner.

2. The retrofitting set (1) according to claim 1, **characterised in that** the tabletop (7) of the camping table (5) covers the recess (4) of the insert (2) in a form-fitting manner.

3. The retrofitting set (1) according to claim 1 or 2, **characterised in that** the insert (2) is made of a plastic material.

4. The retrofitting set (1) according to claim 3, **characterised in that** the insert (2) is produced by injection moulding.

5. The retrofitting set (1) according to any one of claims 1 to 4, **characterised in that** the insert (2) has a first region (9) which extends substantially in a plane of an upper edge (11), and a second region (10) in which the recess (4) is present, wherein the first region (9) is arranged on an upper side (12) of the insert (2), wherein the first region (9) has a receptacle such as a net (13), in which receptacle objects can be stored.

6. The retrofitting set (1) according to any one of claims 1 to 5, **characterised in that** on and/or in the insert (2), a closing mechanism (14) is provided which is designed to be suitable for fixing the camping table (5).

7. The retrofitting set (1) according to claim 6, **characterised in that** the locking mechanism (14) can be activated by pressure.

8. The retrofitting set (1) according to claim 6 or 7, **characterised in that** the locking mechanism (14) can be locked against a spring force and can be unlocked by pressure actuation.

9. A motor vehicle having a retrofitting set (1) according to any one of claims 1 to 8.

10. The motor vehicle according to claim 9, **characterised in that** a surface of the tabletop (7) of the camping table (5) corresponds substantially to a surface of an adjacent interior surface.

11. The motor vehicle according to claim 9 or 10, **characterised in that** the insert (2) is arranged in a side panel of the motor vehicle.

## Revendications

1. Ensemble d'équipement complémentaire (1) pour un véhicule automobile, en particulier un car comme une autocaravane, comportant un élément d'insertion (2) pour incorporation dans un intérieur (3) du véhicule automobile, sachant que l'élément d'insertion (2) est constitué d'une cavité (4) pour la réception amovible d'au moins un article de camping et une couverture pour l'élément d'insertion (2) de telle manière que la cavité (4) peut être couverte, sachant que la couverture est constituée sous la forme d'une table de camping (5) avec un plateau de table (7) et des pieds rétractables (6), sachant que la cavité (4) reçoit les pieds (6) de la table de camping (5) et le plateau de table (7) de la table de camping (5) couvre la cavité (4) de l'élément d'insertion (2), **caractérisé en ce que** la cavité (4) comporte plusieurs bacs (8) et les bacs (8) sont conformés de telle sorte que ceux-ci logent pour l'essentiel de façon précise les pieds (6) de la table de camping (5) à l'état rétracté de ceux-ci.

2. Ensemble d'équipement complémentaire (1) selon la revendication 1, **caractérisé en ce que** le plateau de table (7) de la table de camping (5) recouvre par conformité de forme la cavité (4) de l'élément d'insertion (2).

3. Ensemble d'équipement complémentaire (1) selon la revendication 1 ou 2, **caractérisé en ce que** l'élément d'insertion (2) est formé d'une matière plastique.

4. Ensemble d'équipement complémentaire (1) selon la revendication 3, **caractérisé en ce que** l'élément d'insertion (2) est réalisé par moulage par injection.

5. Ensemble d'équipement complémentaire (1) selon l'une quelconque des revendications 1 à 4, **caractérisé en ce que** l'élément d'insertion (2) comporte une première zone (9), qui passe pour l'essentiel dans un plan d'un bord supérieur (11) et une deuxième zone (10) dans laquelle se trouve la cavité (4), sachant que la première zone (9) est disposée sur un côté supérieur (12) de l'élément d'insertion (2),
sachant que la première zone (9) comporte un logement comme un filet (13), logement dans lequel peuvent être logés des objets.

6. Ensemble d'équipement complémentaire (1) selon l'une quelconque des revendications 1 à 5, **caractérisé en ce qu'**un mécanisme de fermeture (14) est prévu sur et/ou dans l'élément d'insertion (2), lequel est constitué adapté à la fixation de la table de camping (5).

7. Ensemble d'équipement complémentaire (1) selon la revendication 6, **caractérisé en ce que** le mécanisme de fermeture (14) peut être activé par pression.

8. Ensemble d'équipement complémentaire (1) selon la revendication 6 ou 7, **caractérisé en ce que** le mécanisme de fermeture (14) peut être bloqué en opposition à une force élastique et débloqué par actionnement à pression.

9. Véhicule automobile avec un ensemble d'équipement complémentaire (1) selon l'une quelconque des revendications 1 à 8.

10. Véhicule automobile selon la revendication 9, **caractérisé en ce qu'**une surface du plateau de table (7) de la table de camping (5) correspond pour l'essentiel à une surface d'une surface intérieure adjacente.

11. Véhicule automobile selon la revendication 9 ou 10, **caractérisé en ce que** l'élément d'insertion (2) est disposé dans un habillage latéral du véhicule automobile.
